(19) Europäisches Patentamt / European Patent Office / Office européen des brevets

(11) **EP 4 071 681 A1**

(12) **EUROPÄISCHE PATENTANMELDUNG**

(43) Veröffentlichungstag:
**12.10.2022   Patentblatt 2022/41**

(21) Anmeldenummer: **21167242.3**

(22) Anmeldetag: **07.04.2021**

(51) Internationale Patentklassifikation (IPC):
**G06Q 10/06** (2012.01)       **G06Q 50/06** (2012.01)

(52) Gemeinsame Patentklassifikation (CPC):
**G06Q 10/06375; G06Q 10/0637; G06Q 50/06**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Majewski, Kurt**
  **81541 München (DE)**
• **Fige, Peter**
  **80687 München (DE)**
• **Seydenschwanz, Martin**
  **81541 München (DE)**

(54) **VERFAHREN UND VORRICHTUNG ZUR STEUERUNG EINES VIRTUELLEN ENERGIEERZEUGUNGS- UND/ODER -SPEICHERUNGSVERBUNDES**

(57)    Die Erfindung beansprucht ein Verfahren zur Steuerung eines virtuellen Energieerzeugungs- und/oder -speicherungsverbundes (VPP) umfassend eine Anzahl von Komponenten (C1,...,C5), die mittels einer Vielzahl von Bussen energetisch miteinander gekoppelt und mit einem oder mehreren Energieverteilsystemen verbunden sind, wobei das Verfahren umfasst:
- Durchführen einer Optimierung von Einstellwerten (SP) für die Komponenten über einen vorgebbaren Zeithorizont (P), wobei die Einstellwerte Energiemengen umfassen, welche abhängig von Zuständen der Komponenten von abgebenden Komponenten abgegeben und/oder von aufnehmenden Komponenten aufgenommen werden können,
wobei eine Energiemenge vor Durchführung der Optimierung vorgegeben ist oder durch zumindest eine Vereinbarung zwischen wenigstens einer abgebenden und wenigstens einer aufnehmenden Komponente innerhalb eines im Zeithorizont liegenden Vereinbarungszeitraumes über zumindest ein Energieverteilsystem bereits festgelegt ist, wenn eine Vereinbarungsabschlusszeit für diesen Vereinbarungszeitraum bereits abgelaufen ist, oder noch festzulegen ist, wenn eine Vereinbarungsabschlusszeit für diesen Vereinbarungszeitraum in der Zukunft liegt,
- wobei in der Optimierung ein Zusammenwirken zwischen zuvor vorgegebenen oder bereits festgelegten Energiemengen und noch festzulegenden Energiemengen berücksichtigt wird, und
- Durchführen der Steuerung des virtuellen Energieerzeugungs- und/oder -speicherungsverbundes basierend auf den Einstellwerten, wobei die Steuerung einen durch Vereinbarung festgelegten Austausch von Energiemengen zwischen den Komponenten bewirkt.

FIG 3

**Beschreibung**

Die Erfindung betrifft ein Verfahren und eine Vorrichtung zur Steuerung eines virtuellen Energieerzeugungs- oder -speicherungsverbundes, abgekürzt mit Verbund bzw. VPP, umfassend eine Anzahl von miteinander energetisch gekoppelten Komponenten sowie ein Computerprogrammprodukt.

Eine Steuerung der Lastverteilung und der Teilnahme an Energiemärkten von virtuellen Kraftwerksverbünden und Microgrids in hybriden Energiesystemen ist eine Herausforderung. Ein Energiesystem ist hierbei hybrid, wenn es verschiedene Energieformen kombiniert, wie elektrische Energie und diverse andere Energieformen (Heiß-/Kaltwasser, Dampf, Wasserstoff, etc.).

Das Betreiben von Anlagen, die Energie erzeugen, umwandeln oder speichern und das Handeln dieser Energie erfordert eine vorausschauende Abwägung technischer und wirtschaftlicher Handlungsoptionen. Die Teilnahme bzw. das Handeln von Energie an einem Markt verfolgen nicht nur wirtschaftliche, sondern auch technische Ziele. Mit dem "Einkauf" und dem damit verbundenen Zufluss von Energie können die Energiekonsumenten mit Energie versorgt werden. Beim "Verkauf" und dem damit verbundenen Abfluss von Energie können Überschüsse an Energie z.B. an Reservemärkte oder andere Leistungs- oder Speicherungsabnehmer bedient werden. Letztendlich kann mit dem Handel eine Lastverteilung zu unterschiedlichen Zeitpunkten erreicht werden. Aufgrund der Unsicherheit, ob aktuelle Entscheidungen, die die Zukunft betreffen, bestand haben, werden Märkte gestaffelt organisiert, so dass Nachbesserungen möglich bleiben.

Es gibt unterschiedliche Energiemärkte. In den "normalen", auch primär genannten Energiemärkten wird Energie zu einem gewissen Preis zu einer gewissen Zeit angeboten. In sogenannten sekundären, regulierenden Reservemärkte werden Leistungsabweichungen zu einem gewissen Preis zu einer gewissen Zeit angeboten und damit schließlich ausgeglichen.

Topologien für elektrische Verteil- bzw. Transportnetze sind beispielsweise aus [6] bekannt.

Virtuellen Kraftwerksverbünden und Microgrids können wie folgt modelliert werden:

- Busse: Übertragung von Energie / Ressourcen

  ◦ Elektrizität
  ◦ Wasser
  ◦ Thermische Energie (Warm-/Kaltwasser, Dampf)
  ◦ Wasserstoff
  ◦ Etc.

- Komponenten: Erzeugung / Verbrauch / Konvertierung von Energie

  ◦ Erneuerbare Energien (Wind, Solar, etc.)
  ◦ Fossile Erzeuger (Generatoren, Turbinen, etc.)
  ◦ Thermische Komponenten (Boiler, Chiller, Wärmepumpen, etc.)
  ◦ Speicher (Batterien, Thermische Speicher, Pumpspeicherkraftwerke)
  ◦ Lasten (elektrisch, thermisch, etc.)

- Märkte: An Märkten werden Ressource gehandelt

  ◦ Energiemärkten in Form von Auktionen sowie Real-Time Matching (z.B. klassische Day-Ahead bzw. Intraday Energiemärkte, sowie Spot Märkte)
  ◦ Reservemärkte: Bereitstellung von Flexibilität, z.B. Sekundär-/Tertiär Reservemärkte bzw. Demand Response

- VPPs
  o Gruppen von Komponenten, die als Verbund an Märkten teilnehmen und dort ihre summarische Erzeugung bzw. summarischen Verbrauch handeln.

Im Stand der Technik gemäß [1], [2] und [5] wird auf einen speziellen bzw. nationalen Markt fokussiert. Unsicherheiten in der Entwicklung von Marktpreisen und der Energieerzeugung durch erneuerbare Energieerzeugung werden vor allem in [2] nicht berücksichtigt. In [3] wird der Betrieb eines kombinierten Kühl-, Heiz- und Energy Microgrids betrachtet. Dabei werden auch Unsicherheiten bei der erneuerbaren Energieerzeugung berücksichtigt. Hier soll mit der Optimierung ein sicherer und stabiler Betrieb gewährleistet werden. In [5] wird eine zweistufige Optimierung offenbart, welche Fehler bei der Vorausschau für erneuerbare Energieressourcen integriert. Darüber hinaus werden für diese bekannten Optimierungen feste äquidistante Zeitdiskretisierungen gewählt, die zu den speziell betrachten Märkten passen.

Die Aufgabe der Erfindung besteht darin, gegenüber des eingangs genannten Standes der Technik ein verbessertes integriertes Verfahren und System bzw. Vorrichtung anzugeben.

Diese Aufgabe wird durch die unabhängigen Ansprüche gelöst. Vorteilhafte Weiterbildungen sind Gegenstand der abhängigen Ansprüche. Jede Kombination der Merkmale in den abhängigen Ansprüchen mit den entsprechenden unabhängigen Ansprüchen ist möglich.

Die Erfindung beansprucht ein Verfahren zur Steuerung eines virtuellen Energieerzeugungs- und/oder -speicherungsverbundes

- umfassend eine Anzahl von Komponenten, die energetisch miteinander gekoppelt und mit einem oder mehreren Energieverteilsystemen verbunden sind, wobei das Verfahren umfasst:
- Durchführen einer Optimierung von Einstellwerten für die Komponenten über einen vorgebbaren Zeithorizont, wobei die Einstellwerte Energiemengen umfassen, welche abhängig von Zuständen der Komponenten von abgebenden Komponenten abgegeben und/oder von aufnehmenden Komponenten aufgenommen werden können,

wobei eine Energiemenge vor Durchführung der Optimierung vorgegeben ist oder durch zumindest eine Vereinbarung zwischen wenigstens einer abgebenden und wenigstens einer aufnehmenden Komponente innerhalb eines im Zeithorizont liegenden Vereinbarungszeitraumes über/via zumindest ein Energieverteilsystem bereits festgelegt ist, wenn eine Vereinbarungsschlusszeit bereits abgelaufen ist, oder noch festzulegen ist, wenn eine Vereinbarungsschlusszeit für diesen Vereinbarungszeitraum in der Zukunft liegt,

- wobei in der Optimierung ein Zusammenwirken zwischen zuvor vorgegebenen oder bereits festgelegten Energiemengen und noch festzulegenden Energiemengen berücksichtigt wird, und
- Durchführen der Steuerung des virtuellen Energieerzeugungs- und/oder -speicherungsverbundes basierend auf den Einstellwerten, wobei die Steuerung einen durch Vereinbarung festgelegten Austausch von Energiemengen zwischen den Komponenten bewirkt.

Für hybride Energiesysteme (mit beliebigen Energieformen z.B. erneuerbare Energie oder aus Kraftwerken produzierte Energie) können über Busse mit beliebigen Komponenten gekoppelt werden und mit einem oder mehreren Energieverteilsystem verbunden sein. Zustände der genannten Komponenten können Füllzustände von Speicherressource oder auch andere Zustände sein, z.B. wie viele Turbinen gerade laufen, Temperaturen, etc.

Das Energieverteilsystem kann verschiedene Modelle zum Energieaustausch und der damit verbunden Lastverteilung integrieren. Bis ein Energieaustauch durchgeführt wird, werden vorab Einstellwerte für die Komponenten ermittelt. Diese Einstellwerte umfassen dann die Energiemengen, die an Energiemärkten gehandelt werden. Wenn eine Vereinbarung zwischen wenigstens einer abgebenden und wenigstens einer aufnehmenden Komponente innerhalb eines im Zeithorizont liegenden Vereinbarungszeitraumes getroffen wurde, steht die Energiemenge fest. Das erfindungsgemäße Verfahren kann verschiedene Marktmodelle integrieren und ist nicht auf einen speziellen Markt festgelegt.

Der generische Aufbau in Form von Energieformen (über Busse), Komponenten (physikalische Modelle) und Energieverteilsystem mit ggf. unterschiedlichen Märkten erleichtert eine Erweiterung des virtuellen Energieerzeugungs- und/oder - speicherungsverbundes mit weiteren Komponenten.

Die Erfindung verfolgt eine integrierte stochastische Optimierung von Energieverteilung in beliebigen virtuellen Kraftwerksverbünden und Microgrids, die verschiedenen Energieformen zulassen.

Vorzugsweise wird für die Optimierung die Zeitstruktur des Zeithorizonts derart diskretisiert, dass die daraus gewonnenen Zeitabschnitte jeweils flexibel zu einem oder mehreren (überlappenden) Vereinbarungszeiträumen zugeordnet werden (können).

Die Erfindung sieht damit eine variable Kopplung zwischen Zeitdiskretisierung für die Optimierung und Timing (Zeitplanung bzw. -zeitliche Abstimmung) für die Vereinbarungen vor. Die Zeitstruktur des Zeithorizonts kann mit den Zeiträumen für die zu treffen Vereinbarungen z.B. in Märkten gekoppelt werden.

Dabei können für die genannten noch festlegbaren Energiemengen zu Beginn des ersten gewonnenen Zeitabschnittes nach jeder Vereinbarungsabschlusszeit mehrere Szenarien für unterschiedliche Entwicklungen von zukünftig abgebbaren und/oder aufnehmbaren Energiemengen innerhalb des Zeithorizonts gebildet werden.

Es können für die unterschiedlichen Entwicklungen nicht nur wetterbedingte Kriterien eine Rolle spielen, sondern auch prognostizierte Preisentwicklungen an den betrachteten Märkten relevant sein, um z.B. die Energie aus Speicherressourcen möglichst zu Zeiten mit hohen Preisen abzugeben und bei niedrigen Preisen die Speicherressourcen aufzufüllen.

Die Szenarien für unterschiedliche Entwicklungen können in Form einen Szenariobaums organisiert sein, wobei eine Abzweigung im Szenariobaum nach jeder Vereinbarungsabschlusszeit gebildet wird.

Damit können die Vereinbarungen robust gegen unterschiedliche Weiterentwicklungen gemacht werden.

Jedes Szenario kann in ein oder mehrere Szenariozeitintervalle unterteilt werden, wobei jedes Szenariozeitintervall genau einem Zeitabschnitt zugeordnet ist oder werden kann.

Eine Weiterbildung der Erfindung sieht vor, dass ein Vereinbarungszeitraum in mehrere Vereinbarungszeitfenster unterteilt sein kann, wobei für jedes Vereinbarungszeitfenster, das ganz oder teilweise innerhalb des Zeithorizonts liegt, eine abgebbare und/oder aufnehmbare Energiemenge bereits festgelegt worden oder noch festzulegen ist.

Jedem Szenariozeitintervall kann mindestens ein Vereinbarungszeitfenster zugeordnet werden.

Wenn sich ein oder mehrere Szenariozeitintervalle mit einem Vereinbarungszeitfenster überlappen, können jeweils in dem überlappenden Zeitintervall zum entsprechen Szenario passende, zu vereinbarende Energiemengen in die Optimierung eingebracht werden.

Entsprechende Angebote für solche Vereinbarungen können damit in allen überlappenden Szenarien eingeplant werden.
Der Anteil der Überlappung kann durch eine entsprechende Gewichtung ausgedrückt werden.

Jedem Zeitabschnitt im Zeithorizont kann wenigstens ein Szenariozeitintervall zugeordnet werden.

In der Optimierung können Kosten und gegebenenfalls Gewinne für durch die zumindest eine Vereinbarung bereits festgelegte und/oder prognostizierbare Kosten und gegebenenfalls Gewinne für durch die zumindest eine Vereinbarung noch festzulegende Energiemengen berücksichtigt werden.

Die abgebbare Energiemenge und die aufnehmbare Energiemenge sollen ausgeglichen sein und/oder begrenzt werden.

Vereinbarung für Reserven können durch die Reserven in den Speicherressourcen der Komponenten in dem betroffenen Zeitabschnitt bereitgehalten werden.

Abweichungen der noch festzulegenden abgebbaren und/oder aufnehmbaren Energiemenge von der der tatsächlich abgegebenen und/oder bereits aufgenommenen Energiemenge können mit Hilfe einer Kostenfunktion reguliert werden.

Das erfindungsgemäße Verfahren kann zu einer Startzeit beginnen und zu einem Endzeitpunkt enden.

Start- und Endzeitpunkt können einen Zeithorizont umschließen, der gerade im Fokus der Optimierung liegt, wenn sich die Vereinbarungsabschlusszeit nähert.

Das erfindungsgemäße Verfahren ist wiederholbar, ist oder wird wiederholt, wenn sich die genannten Zustände und/oder die Energiemengen nach vorgebbaren Maßkriterien ändern und/oder sich eine Vereinbarungsabschlusszeit nähert.

Die Optimierung kann mittels gemischt ganzzahliger linearer Optimierung durchgeführt werden.

Die lineare Mixed-Integer-Programmierung (gemischt ganzzahliger linearer Optimierung), abgekürzt MILP, ist eine ausgereifte und sehr ausdrucksstarke Möglichkeit, Optimierungsprobleme zu spezifizieren und sie mit freien oder proprietären numerischen Solvern zu lösen. Es wird eine einheitliche Möglichkeit vorgeschlagen, um (Soll-)Einstellwerte für den Betrieb und Gebote für den Handel eines virtuellen Energieerzeugungs- und/oder Energieverteilverbundes, abgekürzt mit Verbund bzw. VPP, auf Energie- und Reservemärkten zu optimieren. Volatile erneuerbare Energien und stochastische Preisprognosen können über einen zugrunde liegenden Szenariobaum integriert werden. Zeitperioden von Markt(an)geboten werden an diesen Szenariobaum gekoppelt, so dass die Schließungszeit eingehalten wird, d. h. dasselbe Gebot wird in allen Zweigen des Szenariobaums berücksichtigt, die nach der Schließungszeit aufgeteilt wurden. Es werden Sanktionen bzw. Strafen eingeführt, wenn die gehandelte Energiemenge bzw. Leistung oder Reserve nicht geliefert werden. Die Kostenfunktion versucht, die Differenz der Kosten dieser Strafen und des Betriebs des VPP und der Einnahmen aus dem Handel zu minimieren.

Eine mögliche Einschränkung im MILP besteht darin, dass angenommen wird, dass das VPP ein Preisnehmer ist und mit ihren Angeboten keinen Einfluss auf die Preise im Markt hat. Eine andere mögliche Annahme ist, dass die zugrunde liegende erneuerbare Erzeugung günstig genug ist, dass das VPP mit Preisen bieten kann, die immer in einem Markt akzeptiert werden. Die Situation, dass ein Angebot nicht angenommen wird, ist daher in der folgenden MILP-Formulierung nicht dargestellt. Außerdem werden Gebotsmengen und -preise nicht gleichzeitig optimiert, da dies quadratische Formulierungen ergeben würde, die nicht im Rahmen der linearen Programmierung abgebildet werden können.

Ein weiterer Aspekt der Erfindung sieht eine Steuerungsvorrichtung zur Steuerung eines virtuellen Energieerzeugungs- und/oder -speicherungsverbundes - umfassend eine Anzahl von Komponenten, die mittels einer Vielzahl von Bussen energetisch miteinander gekoppelt und mit einem oder mehreren Energieverteilsystemen verbunden sind, wobei die Steuerungsvorrichtung dazu konfiguriert ist, folgende Schritte auszuführen:

- Durchführen einer Optimierung von Einstellwerten für die Komponenten über einen vorgebbaren Zeithorizont, wobei die Einstellwerte Energiemengen umfassen, welche abhängig von Zuständen der Komponenten von abgebenden Komponenten abgegeben und/oder von aufnehmenden Komponenten aufgenommen werden können, wobei eine Energiemenge vor Durchführung der Optimierung vorgegeben ist oder durch zumindest eine Vereinbarung zwischen wenigstens einer abgebenden und wenigstens einer aufnehmenden Komponente innerhalb eines im Zeithorizont liegenden Vereinbarungszeitraumes über/via zumindest ein Energieverteilsystem bereits festgelegt ist, wenn eine Vereinbarungsabschlusszeit bereits abgelaufen ist, oder noch festzulegen ist, wenn eine Vereinbarungsabschlusszeit für diesen Vereinbarungszeitraum in der Zukunft liegt,

- wobei in der Optimierung ein Zusammenwirken zwischen zuvor vorgegebenen oder bereits festgelegten Energiemengen und noch festzulegenden Energiemengen berücksichtigt wird, und
- Durchführen der Steuerung des virtuellen Energieerzeugungs- und/oder -speicherungsverbundes basierend auf den Einstellwerten, wobei die Steuerung einen durch Vereinbarung festgelegten Austausch von Energiemengen zwischen den Komponenten bewirkt.

Die Einheiten der Vorrichtung, die dazu eingerichtet sind, solche Verfahrensschritte auszuführen, können hardware-, firmware- und/oder softwaremäßig implementiert sein.

Ein weiterer Aspekt der Erfindung ist ein Computerprogramm(-produkt) mit Programmcodemitteln zur Durchführung des Verfahrens nach einem der vorangehenden Verfahrensansprüche, wenn es auf einer Steuerungsvorrichtung der oben genannten Art abläuft oder auf einem computerlesbaren Speichermedium gespeichert ist.

Das Computerprogramm bzw. -produkt kann auf einem computerlesbaren Speichermedium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuereinrichtung oder in deren Mitteln integriert sein.

Die Steuerungsvorrichtung sowie das Computerprogramm(-produkt) können analog zum oben genannten Verfahren und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Die Figur 1 zeigt eine Netzstruktur für Energieverteilsysteme, VPP, Kraftwerksanlage und deren Verbindungen,

die Figur 2 zeigt einen rollierenden Aufruf des erfindungsgemäßen Verfahrens, und

die Figur 3 zeigt eine schematische Darstellung der Zeitstruktur.

Mit der folgenden Optimierungsmethode kann eine Zielfunktion für einen Planungs- bzw. Zeithorizont optimiert werden, mit deren Ergebnis ein virtuelles Energieerzeugungs- und/oder - speicherungsverbund bzw. -netz, bezeichnet mit VPP, gesteuert werden kann.

Ein Spezialfall von Optimierungsmethoden ist die lineare Optimierung. Sie befasst sich mit der Optimierung linearer Zielfunktionen über einer Menge, die durch lineare Gleichungen und Ungleichungen eingeschränkt ist. Sie ist Grundlage der Lösungsverfahren der (gemischt-) ganzzahligen linearen Optimierung. Ein sogenannter Solver (Löser) ist eine Sammelbezeichnung für spezielle mathematische Computerprogramme, die mathematische Probleme numerisch lösen können. Im Zusammenhang mit MILP (mixed integer linear programming bzw. gemischt ganzzahlige lineare Programmierung) können Standardsolver wie z.B. CPLEX, Scip, Gurobi, Xpress verwendet werden.

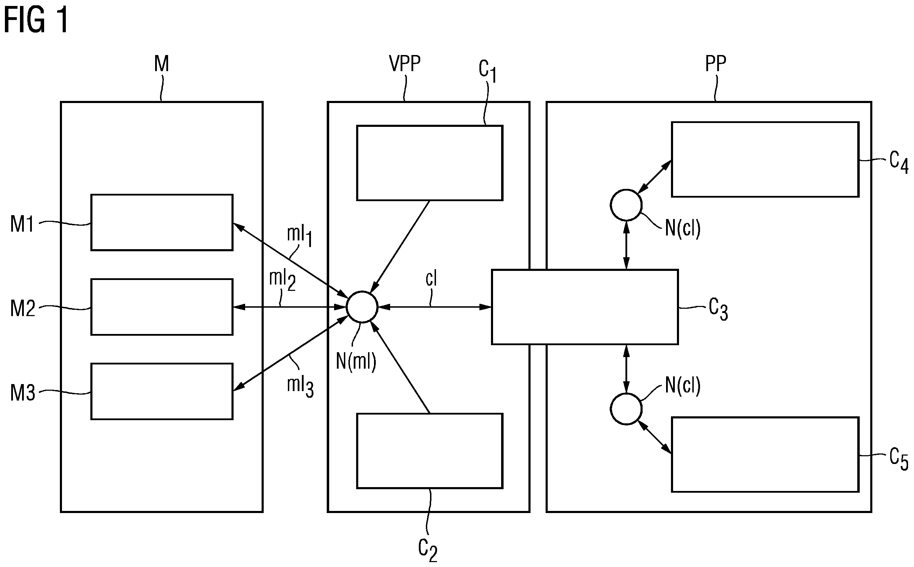

In Figur 1 wird ein Beispiel für eine Netzstruktur eines virtuellen Energieerzeugungs- und/oder -speicherungsverbundes VPP gezeigt, in welchem eine Anzahl von Komponenten z.B. C1 bis C5, energetisch miteinander gekoppelt und mit einem in der Figur 1 mit M bezeichneten Energieverteilsystem oder mehreren Energieverteilsystemen verbunden sind. Ein Energieverteilsystem ist zum Austausch von Energiemengen zwischen den Komponenten eingerichtet. Es kann innerhalb eines im Zeithorizont liegenden Vereinbarungszeitraums Energiemengen zu deren Austausch zwischen den Komponenten vereinbaren. Der Austausch von Energiemengen dient einer Lastverteilung, die besonders in Spitzenlastzeiten wichtig ist. Zu weniger stark belasteten Zeiten können Energiereserven in Speicherressourcen wie z.B. Batterien und Wasserreservoirs gespeichert werden. Eine im Folgenden beschriebene Art, wie ein Energiemengenaustausch vereinbart werden kann, sind Märkte. Märkte stellen eine Umgebung bzw. eine Umschlagplattform innerhalb des Energieverteilsystems dar, an denen Energiemengenangebote und - nachfrage gehandelt werden. Bei Akzeptanz eines Energie(reserven)-angebots kommt es zu der genannten Vereinbarung. Es können eine Menge M von Märkten, z.B. M1 bis M3, und eine Menge C von Komponenten c betrachtet werden, die über eine Menge N von Knoten n mittels Bussen miteinander verbunden sind. Die Busse können eine Menge ML Marktverbindungen ml - in der Figur beispielhaft mit ml1 bis ml3 gekennzeichnet - und eine Menge CL von Komponentenverbindungen cl - in der Figur beispielhaft mit cl1 bis cl3 gekennzeichnet - umfassen. Damit können über Busse verschiedenartige Energieformen (z.B. Windkraft, Wasserkraft etc.) gekoppelt werden.

Die Komponenten können zur Erzeugung erneuerbarer Energieformen z.B. eine Windparkanlage c1 mit 50 mal 2,3 MW oder eine Windparkanlage c2 mit 22 mal 3 MW geeignet sein. Es kann an das VPP zusätzlich ein Kraftwerksanlage PP mit Komponenten zur Energieerzeugung mit Hilfe von Wasserkraft und/oder mit Komponenten z.B. eine Turbine mit Pumpe c3 und Wasserspeicher c4 bzw. c5 verschiedener Größe (z.B. 700 hm, 300 hm) umfassen, die nicht nur zur Wasserspeisung der Turbine, sondern auch zur Energiespeicherung geeignet sein können.

Wenn die Knoten N eine Komponente z.B. c1 mit einem Markt z.B. M1 verbindet, dann wird der Knoten mit N(ml) bezeichnet. Wenn der Knoten N eine Komponente z.B. c3 mit einer anderen Komponenten c4 bezeichnet, dann wird der Knoten mit N(cl) bezeichnet.

Märkte können primäre Energiemärkte z.B. sogenannte Day Ahead (Tag voraus) Märkte M1 bzw. sogenannte Intraday (am selben Tag) Märkte M2 sein, an denen erzeugbare Energie gehandelt wird. Es gibt auch sekundäre (Regel-)Märkte z.B. Reservemärkte M3, in denen Regelleistung gehandelt wird. Es sind auch weitere tertiäre Märkte denkbar.

Das erfindungsgemäße Verfahren kann in mehrere Aufgaben unterteilt werden, die ausgeführt werden, um ein optimales Ergebnis zu erzielen. Mit Hilfe der Einstellwerte, die aus der Optimierung zur Zielerreichung resultieren, kann der virtuelle Energieerzeugungs- und -speicherungsverbund mit seinen Komponenten mittels einer Steuerungsvorrichtung gesteuert werden. Im Beispiel kann die in der Figur 1 nicht gezeigte Steuerungsvorrichtung Komponentenverbindungen cl gekoppelt/integriert sein.

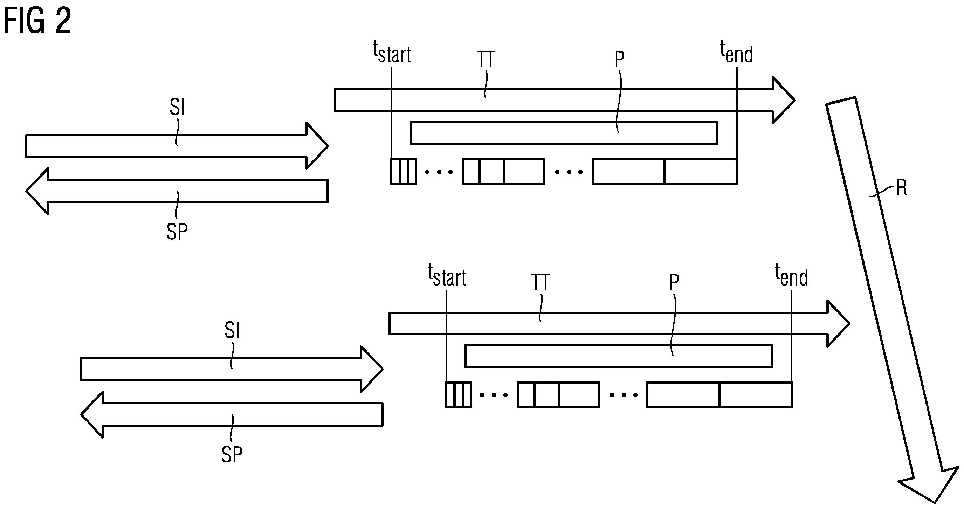

Das nachstehend formulierte MILP-Modell, das als Optimierungsmethode verwendet werden kann, kann - wie in Figur 2 dargestellt, rollierend, d.h. wiederholt, aufgerufen werden (mit R gekennzeichnet) innerhalb eines Optimierungs- bzw. Zeithorizonts P mit einem Startzeitpunkt $t_{start}$ und Endzeitpunkt $t_{end}$.

Hierbei werden vor allem zwei Ziele verfolgt. Zugleich sollen (Soll-)Einstellwerte SP für den Betrieb der Komponenten im Zeitraum von $t_{start}$ bis $t_{end}$ erlangt und außerdem die Angebote bzw. Gebote für die Teilnahme an allen Marktsitzungen festgelegt werden, die in diesem Zeitraum offen Gebote haben. Eine Marktsitzung umfasst einen Vereinbarungszeitraum mit einem Öffnungszeitpunkt zu Beginn des Vereinbarungszeitraums und einem Schließungszeitpunkt zum Ende des Vereinbarungszeitraums. Während der Markt geöffnet ist, können Angebote und Gebote in der Marktsitzung gehandelt werden. In beiden Fällen erledigen die Aufgaben folgendes: Sammeln der erforderlichen Statusinformationen SI über Komponenten und Märkte, Vorhersage der Entwicklung der erneuerbaren Energien und Preise, Optimierung der betreffenden Einstellwerten und Gebotszeitpunkte sowie Nachbearbeitung und Bereitstellung der erforderlichen Ergebnisse für die Komponenten oder Märkte. Die Aufgaben, die mit den Kästchen angedeutet sind, können zu Beginn in kurzen Zeitabständen und gegen Ende mit längeren Zeitabständen geplant bzw. durchgeführt werden.

Jedem Aufruf der Optimierungsmethode ist ein Stichtag zugeordnet, d. h. der Zeitpunkt, zu dem die Optimierungsmethode abgeschlossen sein muss, z. B. die Schließzeit der Zielmarktsitzung. Dieser Stichtag und die Zeitdauer für die Optimierung bestimmen den Zeitpunkt, zu dem sie gestartet wird. Diese Zeit ist in der Regel ein bestimmter Bruchteil einer Stunde vor Ablauf der Frist, z. B. 30 Minuten vor Schließung der betreffenden Marktsitzung. In Online-Situationen wird die Optimierung gestartet, wenn die tatsächliche Zeit TT erreicht wird, und in der Nachbearbeitungs-Situation, wenn eine simulierte Zeit diesen Wert erreicht.

Der Zeithorizont muss mindestens die Zeit abdecken, innerhalb der die letzten relevanten Status- bzw. Zustandsinformationen bis zu dem Zeitpunkt vorhanden sind, für den die angeforderten Ergebnisse der Optimierung relevant sind. Es sollte eine gewisse Zeit nach diesem letzten Ergebnis ausgenutzt werden, so dass die Folgen der letzten relevanten Entscheidungen bei der Optimierung dargestellt und berücksichtigt werden können. Der Planungshorizont P bzw. das Optimierungszeitintervall **OS** ist in eine Reihe von aufeinanderfolgenden Optimierungszeitabschnitte $OS := \{os_1, ..., os_T\}$ mit einer entsprechenden Dauer $\Delta$ unterteilt. Im Prinzip kann die Dauer in jedem Zeitabschnitt unterschiedlich sein. Wenn die Gebotszeiträume z.B. in Stunden angegeben sind, würde man in der Regel eine Stunde als Zeitabschnitt in der Optimierung auswählen und die Zeitabschnitte jeweils an den Gebotszeiträumen ausrichten. Für eine spätere Verwendung wird $pre(os_t) = os_{t-1}$ definiert, wenn $t \in \{2,...,T\}$. Um keine Lücken im Planungshorizont zu haben, sollte der letzte Zeitpunkt des Zeitabschnittes $os_{t-1}$ der erste Zeitpunkt des Zeitabschnitts $os_t$ sein. Insbesondere gilt $t_{end} = t_{start} + T\Delta$.

In folgender Tabelle werden Beispiele für Planungshorizonte angegeben:

| Name der Aufgabe | $t_{start}$ | $\Delta$ | $T$ |
|---|---|---|---|
| Day-Ahead | 11:00 am | 1 h | 72 |
| Intraday Sitzung 1 | 17:00 am | 1 h | 48 |
| Intraday Sitzung 2 | 21:00 am | 1 h | 48 |
| ... | ... | ... | ... |
| Intraday Sitzung 6 | 12:00 am | 1 h | 48 |
| Reserve Markt | 18:00 am | 1 h | 72 |
| Verteilung & Kontrolle | Stundenbeginn | 15 min | 16 |

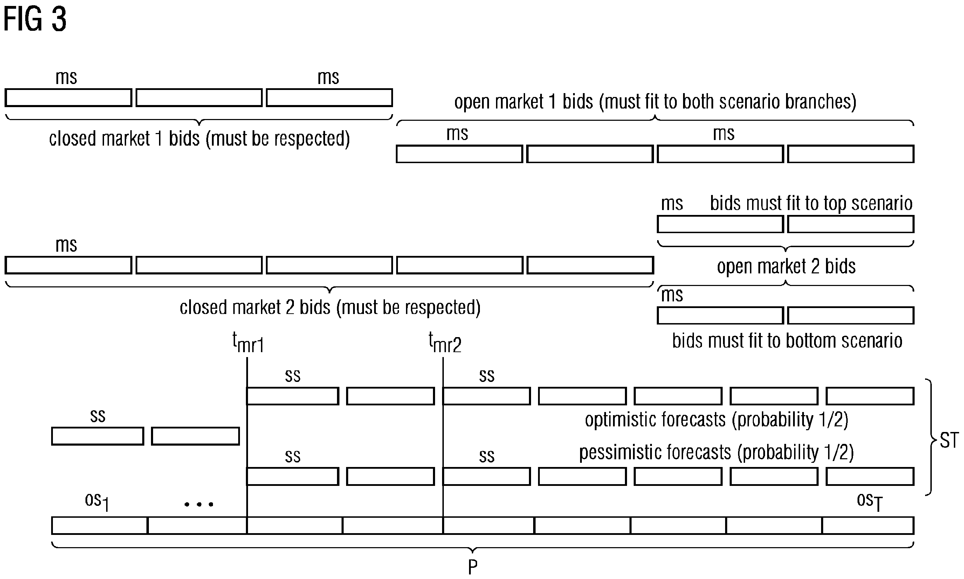

Wie beispielsweise in Figur 3 angedeutet, kann zusätzlich zu den Optimierungszeitabschnitten ein Szenariobaum ST erstellt werden, der Varianten einer stochastischen zukünftigen Entwicklung von Marktentscheidungen erfassen kann. Der Zeitpunkt, zu dem ein Zweig der Szenariostruktur in mehrere Unterzweige aufgeteilt wird, ist in der Regel die Vereinbarungsabschlusszeit(-punkt) $t_{mr1}$, $t_{mr2}$, zu dem spätestens Marktentscheidungen bzw. Vereinbarungen getroffen werden müssen. Beispielsweise kann bei einem Day-Ahead Markt die Vereinbarungsabschlusszeit z.B. 12 Uhr am heutigen Tag sein. Zu dieser Zeit müssen dann spätestens die Angebote für morgen abgeben worden sein. Die Vereinbarungsabschlusszeit und die Schließzeit einer Marktsitzung müssen nicht zwingend übereinstimmen. Bei Intra-Day Märkten stimmt in der Regel die Vereinbarungsabschlusszeit mit der Schließzeit der Marktsitzung überein.

Mit Hilfe dieser Aufteilungen können diese Entscheidungen gegen volatiles Verhalten bei erneuerbaren Energieformen und unsichere Preisentwicklungen nach diesem Zeitpunkt getroffen werden. Das Verhalten unsicherer Parameter kann auf verschiedene mögliche zukünftige Entwicklungen folgen, jedoch müssen die Entscheidungen auf jede dieser Teilzweige anwendbar sein und gute Ergebnisse in allen oder in den meisten dieser nachfolgenden Zweige liefern.

Zu diesem Zweck wird einen Satz SS von Szenario-Zeitintervallen eingeführt. Jedes Szenario-Zeitintervall $ss \in SS$ deckt das gleiche Zeitintervall wie ein zugehöriger Optimierungszeitabschnitt $os(ss) \in OS$. Wenn dieser Optimierungszeitabschnitt nicht der erste Optimierungsabschnitt ist, gibt es auch einen Vorgänger-Szenario-Zeitintervalle $pre(ss) \in SS$, der $os(pre(ss))=pre(os(ss))$ erfüllt. SS(os') ist ein Satz aller Szenario-Zeitintervalle, die dem Optimierungszeitabschnitt $os' \in OS$ zugeordnet sind, d.h.

$$SS(os') \quad := \{ss \in SS: os(ss) = os'\}. \quad\quad\quad (1)$$

Es wird davon ausgegangen, dass jedem Optimierungszeitabschnitt mindestens ein Szenario-Zeitintervall zugeordnet ist. Vereinfacht wird davon ausgegangen, dass $SS(os_1)$ genau ein Element enthält, sodass die Parameter des anfänglichen Zeitintervalls eindeutig sind. In deterministischen Situationen gibt es genau einen Szenario-Zeitintervall für jeden Optimierungsabschnitt.

Marktsitzungen umfassen Vereinbarungs- bzw. Marktzeiträume, für die in der Vergangenheit ein Angebot bzw. Gebot gemacht wurde oder in der Zukunft erstellt werden kann. Ein zukünftiges Gebot muss vor der Schließzeit der relevanten Marktsitzung abgegeben werden. Diese Zeiträume können unabhängig von den Optimierungszeitabschnitten oder Szenario-Zeitintervallen sein. Beispielsweise verwendet die Verteil- und Kontrolloptimierung in der Regel kleinere Zeitintervalle als die Länge eines Gebotszeitraumes.

Markt- bzw. Gebotszeiträume können mit den Szenario-Zeitintervallen wie folgt verbunden werden (siehe Figur 3): MR ist eine Menge von Marktsitzungen mit einem oder mehreren geschlossenen oder offenen Gebots-Zeiträumen, die in einem Optimierungszeitintervall liegen. Für jede dieser Marktsitzungen $mr \in MR$ sind ihre jeweiligen Schließungszeiten $t_{mr}$, die Anzahl der Gebote $B_{mr}$ in dieser Marktsitzung und die Gebotszeiträume $I_{mr,1},...,I_{mr,B_{mr}}$ bekannt.

Für jede Marktsitzung $mr \in MR$ gibt es einen Optimierungszeitabschnitt $os(mr)$ kurz vor der Schließungszeit $t_{mr}$. Falls die Schließungszeit so früh ist, dass es keinen solchen Optimierungszeitabschnitt gibt, ist $os(mr)$ der erste Optimierungsabschnitt. Für jedes Szenario-Zeitintervall $SS(os(mr))$ und den Gebotszeitraum $b \in \{1,...,B_{mr}\}$ wird ein Marktzeitfenster ms festgelegt, der den Zeitraum $I_{mr,b}$ abdeckt. Die Intention dieser Marktzeitfenster besteht darin, die Gebotsentscheidung für das VPP und das (An)gebot b in die Marktsitzung zu übertragen. Es ist in diesem Fall die Situation gegeben, dass das Szenario-Zeitintervall ss kurz vor der Schließungszeit dieser Marktsitzung festgelegt ist. In Figur 3 zeigt eine Darstellung der Marktzeitfenster, die einem Szenario-Zeitintervall zugeordnet sind.

Es kann zwischen geschlossenen Marktzeitfenstern, bei denen es sich um Marktfenster handelt, die zu einer Marktsitzung gehören, die $t_{mr} \leq t_{start} + \Delta$ erfüllt, und offenen Marktzeitfenstern mit $t_{mr} > t_{start} + \Delta$ unterschieden werden. Bei geschlossenen Marktzeitfenstern ist die Gebotsmenge ein fester Parameter in der Optimierung, während bei offenen Marktzeitfenstern die Gebotsmenge eine Variable ist, die in die Optimierung einfließt. Daher wird die Menge der Marktzeitfenster erstens in eine Teilmenge von Primär-Energiemarkt-Zeitfenstern EMS und Reserve-Marktzeitfenstern RMS, und zweitens in Teilmengen von offenen Primär-Energiemarkt-Zeitfenstern OEMS, von geschlossenen Primär-Energiemarkt-Zeitfenstern CEMS, von offenen Reserve-Markt-Zeitfenstern ORMS und von geschlossenen ReserveMarkt-Zeitfenstern CRMS unterteilt.

Im Folgenden werden Parameter und Variablen eingeführt und die Beziehungen zwischen ihnen über lineare Gleichungen und Ungleichungen spezifiziert. Angesichts der Parameter in einer Wiederholung des erfindungsgemäßen Verfahrens findet die Optimierung Werte für die Variablen, die diese Beziehungen erfüllen, und minimiert die Kosten unter all diesen praktikablen Lösungen. Diese optimierten Variablenwerte können möglicherweise nach einer entsprechenden Nachbearbeitung als (Soll-)Einstellwerte oder zur Angebotsbildung auf den Märkten verwendet werden.

In den Systemgleichungen erscheinen die Komponenten durch die (Energie-)Durchflussvariablen Q(cl,ss) für jede Komponentenverbindung $cl \in CL$ und Szenario-Zeitintervall $ss \in SS$. Positive Werte charakterisieren den Abfluss (d.h. den Aufwärts-Fluss von der Komponente PP(cl) zum Knoten N(cl) über diese Verbindung), negative Werte repräsentieren den Zufluss (d.h. den Abwärtsfluss von Knoten N(cl) zu der Komponente PP(cl) zum über diese Verbindung). In ähnlicher Weise gibt es für jede Reserveverbindung $rl \in RL$ und Szenario-Zeitintervall $ss \in SS$. Darüber hinaus gibt es Kosten C(pp,ss) zu jeder Komponente $pp \in PP$ und Szenario-Zeitintervall $ss \in SS$ zugeordnet. Diese Kosten beziehen sich auf die Mengen und Reserven der Komponentenverbindungen dieser Komponente.

Das interne Modell einer Komponente, d.h. die Beziehungen zwischen den Variablen Q(cl,ss) für alle cl∈CL mit PP(cl)=pp und Kosten C(pp,ss) werden nicht betrachtet. Für eine einfache erneuerbare Komponente, z.B. ren∈PP, wie z.B. einen Windpark oder eine Photovoltaik-Anlage, gibt es nur eine Komponente und Reserveverbindung, z.B. $cl_{ren}$∈RL. Es könnte einfach C(ren,ss)=0 gesetzt sein (erneuerbare Energie ist kostenlos) und

$$R^-(cl_{ren}, ss) \leq Q(cl_{ren}, ss) \leq P_{max}(cl_{ren}, ss) - R^+(cl_{ren}, ss), \qquad (2)$$

wobei $P_{max}(cl_{ren},ss)$ die vorhergesagte maximale Leistung ist, und die erneuerbare Komponente ren kann in Szenario-Zeitintervall ss liefern. Natürlich kann das Komponentenmodell wesentlich komplexer sein, z.B. für Pumpwasserkraftwerke mit mehreren Turbinen und Pumpen. Es kann eigene interne binäre, ganzzahlige und kontinuierliche Variablen und zugehörige Systeme linearer Gleichungen und Ungleichungen umfassen. Solche Komponentenmodelle können unabhängig voneinander entwickelt werden.

Für jede Verbindung zu einem Markt (Marktverbindung) ml∈ML und Szenario-Zeitintervall ss∈SS gibt es eine Durchflussvariable, Q(ml,ss), die den Energiefluss von Knoten N(ml) zu Markt M(ml) quantifiziert, um die akzeptierten Gebote dieses Marktes während des Szenario-Zeitinteralls ss zu erfüllen. Für jeden Knoten nEN und Szenario-Zeitintervall ss∈SS sollten die produzierten Energiemengen nach Komponenten und verbrauchten Energiemengen durch die Märkte ausgewogen sein:

$$\sum_{cl \in CL, N(cl)=n} Q(cl, ss) + Q^-_{imbalance}(n, ss) = \sum_{ml \in ML(n), N(ml)=n} Q(ml, ss) + Q^+_{imbalance}(n, ss).$$

$$(3)$$

Die Variablen $Q^+_{imbalance}(n, ss)$ und $Q^-_{imbalance}(n, ss)$ erfassen für Aufwärts- und Abwärtsungleichgewichte am Knoten n im Szenario-Zeitintervall ss. Ungleichgewichte können in der Regel durch andere Teilnehmer ausgeglichen werden, die nicht im Modell oder Reserve-Kapazitäten enthalten sind. Die Ungleichgewichte müssen

$$0 \leq Q^-_{imbalance}(n, ss) \leq Q^-_{imbalance,max}(n, ss), \quad (4)$$

$$0 \leq Q^+_{imbalance}(n, ss) \leq Q^+_{imbalance,max}(n, ss). \quad (5)$$

erfüllen. Ungleichgewichte werden in der Kostenkalkulation mit den Bedingungen

$$\ldots + C^-_{imbalance}(n, ss)Q^-_{imbalance}(n, ss) + C^+_{imbalance}(n, ss)Q^+_{imbalance}(n, ss) \ldots \quad (6)$$

dargestellt, wobei $C^-_{imbalance}(n, ss)$ und $C^+_{imbalance}(n, ss)$ Strafen für Abwärts- und Aufwärtsungleichgewichte am Knoten n im Szenario-Zeitintervall ss sind. Vergleiche hierzu Gleichung (27).

Für jedes offene Energiemarktzeitfenster ms∈OEMS werden zwei binäre Variablen $I_{buying}$ (ms) und $I_{selling}$ (ms) definiert mit der Bedingung:

$$I_{buying}(ms) + I_{selling}(ms) \leq 1, \quad (7)$$

um sicherzustellen, dass das VPP entweder kauft oder verkauft in diesem Marktzeitfenster.

Als nächstes werden die Variablen S(ms) und B(ms) für jedes offene Marktfenster ms∈OEMS eingeführt, die die Menge der verkauften bzw. vom VPP für Marktzeitfenster ms gekauften Energie darstellen. Diese Variablen müssen die Ungleichheiten

$$0 \leq S(ms) \leq S_{max}(ms)I_{selling}(ms), \qquad (8)$$

$$0 \leq B(ms) \leq B_{max}(ms)I_{buying}(ms), \qquad (9)$$

erfüllen, wobei $S_{max}(ms)$ das maximale Volumen bzw. Menge, das verkauft werden kann, und $B_{max}(ms)$ das maximale Volumen, das im Marktzeitfenster ms erworben werden kann.

Für geschlossene Energiemarkt-Zeitfenster $ms \in CEMS$ ist die verkaufte S(ms) oder gekaufte B(ms) Menge an Leistung bekannt, aber im Vergleich zu offenen Marktzeitfenstern sind diese Zahlen eher Konstante als Variablen. Mit Hilfe dieser Definition können die Gleichungen

$$\sum_{cl \in VL} Q(cl, ss) + Q^+_{deviation}(ss) = Q^-_{deviation}(ss) + \sum_{ms \in EMS} w_{ss}(ms)(S(ms) - B(ms)), \qquad (10)$$

$$\sum_{ml \in ML} Q(ml, ss) = \sum_{ms \in EMS} w_{ss}(ms)(S(ms) - B(ms)) \qquad (11)$$

definiert werden.

Hier wird das Gewicht $w_{ss}(ms)$ durch

$$w_{ss}(ms) = \frac{|ss \cap ms|}{|ss|}, \qquad (12)$$

definiert, wobei $ss \cap ms$ die Schnittmenge der Zeitintervalle von ss und ms und |I| die Dauer eines Intervalls I ist.

Die Variablen $Q^-_{deviation}(ss)$ und $Q^+_{deviation}(ss)$ erfassen eine mögliche Abwärts- und Aufwärtsabweichung zwischen produzierter und gehandelter Leistung des VPP im Szenario-Zeitintervall ss. Diese Variablen müssen

$$0 \leq Q^-_{deviation}(ss) \leq Q^-_{deviation,max}(ss), \qquad (13)$$

$$0 \leq Q^+_{deviation}(ss) \leq Q^+_{deviation,max}(ss), \qquad (14)$$

erfüllen, wobei $Q^-_{deviation,max}(ss)$ ist die maximal zulässige Abweichung nach unten ist, und $Q^+_{deviation,max}(ss)$ die maximal zulässige Aufwärtsabweichung. Abweichungen werden in der Kostenkalkulation mit den Bedingungen

$$... + C^-_{deviation}(ss)Q^-_{deviation}(ss) + C^+_{deviation}(ss)Q^+_{deviation}(ss) ... \qquad (15)$$

beschrieben, wobei $C^-_{deviation}(ss)$ und $C^+_{deviation}(ss)$ Strafen für Abwärts- und Aufwärtsabweichungen im Szenario-Zeitintervall sind (vergleiche Gleichung (27)).

Wenn sich die vorhergesagten Preise zu offenen Marktzeitfenstern, die zu zwei verschiedenen Energiemärkten gehören, unterscheiden und diese beiden Marktfenster sich überlappende Zeitintervalle aufweisen, könnte das VPP theoretisch mit dem günstigeren Preis auf dem Markt kaufen und die gleiche Menge auf dem Markt mit dem höheren Preis in diesem Zeitintervall verkaufen. Um diese Art von Arbitrage auszuschließen, werden weitere binäre Variablen $I_{selling}(ss)$ und $I_{buying}(ss)$ für jedes Szenario-Zeitintervall $ss \in SS$ eingeführt, wobei die Bedingung

$$I_{buying}(ss) + I_{selling}(ss) \leq 1, \quad (16)$$

erfüllt wird. Für jedes $ms \in OEMS$ mit $w_s s(ms) > 0$ gilt:

$$I_{selling}(ss) \geq I_{selling}(ms), \quad (17)$$

$$I_{buying}(ss) \geq I_{buying}(ms). \quad (18)$$

Diese zusätzlichen Ungleichheiten impliziert Gleichung (7).

Für jedes offenen Reservemarkt-Zeitfenster msEORMS werden zwei Variablen definiert, nämlich die gehandelte Aufwärts-Reserve $R^+(ms)$ und die Abwärts-Reserve $R^-(ms)$ im Zeitfenster und Markt, die durch ms definiert sind. Diese Variablen sind durch

$$0 \leq R^-(ms) \leq R_{max}^-(ms), \quad (19)$$

$$0 \leq R^+(ms) \leq R_{max}^+(ms), \quad (20)$$

definiert, wobei $R_{max}^-(ms)$ eine Obergrenze für das Volumen ist, die vom VPP als Abwärts-Reserve im offenen Reservemarkt-Zeitfenster ms gehandelt werden kann. In ähnlicher Weise ist $R_{max}^+(ms)$ eine Obergrenze für das Volumen, die vom VPP als Aufwärts-Reserve im offenen Reservemarkt-Zeitfenster ms gehandelt werden kann.

In Bezug auf das geschlossenen Reservemarkt-Zeitfenster msECRMS haben wir auch die Werte $R^-(ms)$ und $R^+(ms)$, mit der gleichen Bedeutung, aber sie sind konstante Parameter und keine Variablen, da ihre Werte spätestens zur Schließungszeit des Marktes festgelegt wurden.

Die folgenden Ungleichheiten stellen sicher, dass in jedem Szenario-Zeitintervall $ss \in SS$ die Komponenten des VPP in der Lage sind, die gehandelten Reservekapazitäten auf den Reservemärkten über die Reserveverbindungen bereitzustellen:

$$\sum_{rl \in RL} R^-(rl, ss) + R_{missing}^-(ss) \geq \sum_{ms \in RMS} w_{ss}(ms) R^-(ms), \quad (21)$$

$$\sum_{rl \in RL} R^+(rl, ss) + R_{missing}^+(ss) \geq \sum_{ms \in RMS} w_{ss}(ms) R^+(ms), \quad (22)$$

Hier ist $R_{missing}^-(ss)$ eine zusätzliche Variable, die die fehlende Abwärts-Reserve aus dem VPP in einem Szenario-Zeitintervall ss im Vergleich zu dem, was sie in diesem Zeitintervall geboten hat, erfasst und $R_{missing}^+(ss)$ die entsprechende fehlende Aufwärts-Reserve. Diese Variablen müssen

$$0 \le R^-_{missing}(ss) \le R^-_{missing,max}(ss), \quad (23)$$

$$0 \le R^+_{missing}(ss) \le R^+_{missing,max}(ss), \quad (24)$$

erfüllen, wobei $R^-_{missing,max}(ss)$ die maximal zulässige fehlende Abwärts-Reserve ist und $R^+_{missing,max}(ss)$ die maximal zulässige fehlende Aufwärts-Reserve. Fehlende Reserven werden bei der Kostenkalkulation mit den Bedingungen

$$... + C^-_{missing}(ss)R^-_{missing}(ss) + C^+_{missing}(ss)R^+_{missing}(ss) ... \quad (25)$$

dargestellt, wobei $C^-_{missing}(ss)$ und $C^+_{missing}(ss)$ Strafen für fehlende Ab- und Aufwärts-reserven in Szenario-Intervallen sind (vergleiche (27)).

In einigen Reservemärkten gibt es zusätzliche Einschränkungen. Zum Beispiel könnte eine Aufwärts- und Abwärts-Reserve in einem bestimmten Verhältnis $f_{+/-}(ms)$, (z.B. up:down = 2:1) bereitgestellt werden müssen:

$$R^+(ms) = f_{+/-}(ms)R^-(ms). \quad (26)$$

Die lineare Kostenfunktion kombiniert alle bereits genannten Begriffe im Zusammenhang mit der ökonomischen Bewertung innerhalb des Optimierungshorizonts als

$$\begin{aligned}
C_{total} = &\sum_{pp \in PP} \sum_{ss \in SS} C(pp, ss) \\
&+ \sum_{n \in N} \sum_{ss \in SS} \left(C^-_{imbalance}(n, ss)Q^-_{imbalance}(n, ss) + C^+_{imbalance}(n, ss)Q^+_{imbalance}(n, ss)\right) \\
&+ \sum_{ss \in SS} \left(C^-_{deviation}(ss)Q^-_{deviation}(ss) + C^+_{deviation}(ss)Q^+_{deviation}(ss)\right) \\
&+ \sum_{ss \in SS} \left(C^-_{missing}(ss)R^-_{missing}(ss) + C^+_{missing}(ss)R^+_{missing}(ss)\right) \\
&- \sum_{ms \in OEMS} \left(C^-_{energy}(ms)S(ms) - C^+_{energy}(ms)B(ms)\right) \\
&- \sum_{ms \in ORMS} \left(C^-_{reserve}(ms)R^-(ms) + C^+_{reserve}(ms)R^+(ms)\right). \quad (27)
\end{aligned}$$

Die letzten beiden Zeilen in dieser Summe stellen das Negative der Einnahmen aus der Marktteilnahme dar. Hier ist $C^-_{energy}(ms)$ der (tatsächliche oder prognostizierte) Preis für den Kauf und $C^+_{energy}(ms)$ für den Verkauf von Energie in einem Marktzeitfenster ms∈EMS, während $C^-_{reserve}(ms)$ und $C^+_{reserve}(ms)$ der Preis für die Bereitstellung von Abwärts- und Aufwärts-Reserve während eines Reservemarktzeitfensters ms∈RMS ist.

Sobald das MILP optimal gelöst ist, kann man die Werte der Variablen in der optimierten Lösung wie folgt verwenden: Wenn die Lösung sich auf die Dispatch & Control Aufgabe konzentriert, d.h. das Ziel bei der Optimierung wird auf vorgegebene oder bereits festgelegte Energiemengen aus einem geschlossenen Energiemarkt gelegt, bestimmen die Werte Q(cl,ss) für cl∈VL des VPP die Einstellwerte in einem Szenario-Zeitintervall ss. Darüber hinaus sind je nach den internen Modellen der Komponenten auch die internen Variablenwerte für jedes Szenario-Zeitintervall bekannt.

Die Komponenten sollten so gesteuert werden, dass sie diesen Einstellwerten so gut wie möglich folgen.

Wenn die Lösung sich auf eine Marktbieter-Aufgabe konzentriert, z. B. von Open Market Round (offene Marktsitzung) mr, d.h. das Ziel der Optimierung liegt auf prognostizierbaren Energiemengen aus einen in Zukunft schließenden Energiemarkt, können die zugehörigen Marktzeitfenster $ms \in MS$ genutzt werden, um die Energiemenge festzulegen, die im Gebotszeitzeitfenster ms gehandelt werden sollte. In Zeitfenstern auf dem Energiemarkt handelt es sich um den Wert S(ms), der verkauft werden sollte, und um den Wert B(ms), der gekauft werden sollte. Dieses Modell lässt nur einen dieser beiden Werte echt größer null zu. Bei Reservemarktzeitfenstern ist dies der Wert $R^+(ms)$, der als Aufwärts-Reserve angeboten werden sollte, und $R^-(ms)$, der als Abwärts-Reserve gehandelt werden soll.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechnergestützt" kann im Zusammenhang mit der Erfindung beispielsweise eine Implementierung des Verfahrens verstanden werden, bei dem insbesondere ein Prozessor, der Teil der Steuerungsvorrichtung bzw. -einheit sein kann, mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Referenzen

[1]: Optimal bidding of a virtual power plant on the Spanish day-ahead and intraday market for electricity Wozabal, D.; Rameseder, G. European Journal of Operational Research 280(2), p. 639-655, 2020

[2]: Stochastic optimization model for the weekly scheduling of a hydropower system in day-ahead and secondary regulation reserve markets Chazarra, M.; Garcia-González, J.; Perez-Diaz, J. I.; Arteseros, M. Electric Power Systems Research 130, p.67-77, 2016

[3]: A stochastic-robust coordinated optimization model for CCHP micro-grid considering multi-energy operation and power trading with electricity markets under uncertainties Wang, Y.; Tang, L.; Yang, Y.; Sun, W.; Zhao, H. Energy 198, 2020

[4]: Method for the operation planning of virtual power plants considering forecasting errors of distributed energy resources Sowa, T.; Vasconcelos, M.; Schnettler, A.; Metzger, M.; Hammer, A.; Reischboek, M.; Köberle, R. Electrical Engineering 98(4), p. 347-354, 2016

[5]: Optimal Operation and Bidding Strategy of a Virtual Power Plant Integrated with Energy Storage Systems and Elasticity Demand Response Wenjun T.; Hong-Tzer Y. IEEE Access 7, p. 79798 - 79809, 2019

[6] US 9,887,545 B2

**Patentansprüche**

1. Verfahren zur Steuerung eines virtuellen Energieerzeugungs- und/oder -speicherungsverbundes (VPP) umfassend eine Anzahl von Komponenten (C1,...,C5), die mittels einer Vielzahl von Bussen energetisch miteinander gekoppelt und mit einem oder mehreren Energieverteilsystemen verbunden sind, wobei das Verfahren umfasst:

   - Durchführen einer Optimierung von Einstellwerten (SP) für die Komponenten über einen vorgebbaren Zeithorizont (P), wobei die Einstellwerte Energiemengen umfassen, welche abhängig von Zuständen der Komponenten von abgebenden Komponenten abgegeben und/oder von aufnehmenden Komponenten aufgenommen werden können,
   wobei eine Energiemenge vor Durchführung der Optimierung vorgegeben ist oder durch zumindest eine Vereinbarung zwischen wenigstens einer abgebenden und wenigstens einer aufnehmenden Komponente innerhalb eines im Zeithorizont liegenden Vereinbarungszeitraumes über zumindest ein Energieverteilsystem bereits festgelegt ist, wenn eine Vereinbarungsabschlusszeit für diesen Vereinbarungszeitraum bereits abgelaufen ist, oder noch festzulegen ist, wenn eine Vereinbarungsabschlusszeit für diesen Vereinbarungszeitraum in der Zukunft liegt,
   - wobei in der Optimierung ein Zusammenwirken zwischen zuvor vorgegebenen oder bereits festgelegten Energiemengen und noch festzulegenden Energiemengen berücksichtigt wird, und
   - Durchführen der Steuerung des virtuellen Energieerzeugungs- und/oder -speicherungsverbundes basierend auf den Einstellwerten, wobei die Steuerung einen durch Vereinbarung festgelegten Austausch von Energiemengen zwischen den Komponenten bewirkt.

2. Verfahren nach dem vorhergehenden Anspruch, **dadurch gekennzeichnet, dass** in der Optimierung Kosten für durch die zumindest eine Vereinbarung bereits festgelegte und/oder prognostizierbare Kosten für durch die zumindest eine Vereinbarung noch festzulegende Energiemengen berücksichtigt werden.

3. Verfahren nach einem der vorhergehenden Ansprüche, **dadurch gekennzeichnet, dass** für die Optimierung die Zeitstruktur des Zeithorizonts derart diskretisiert wird, dass die daraus gewonnenen Zeitabschnitte ($os_1,...,os_T$) jeweils flexibel zu einem oder mehreren Vereinbarungszeiträumen zugeordnet werden können.

4. Verfahren nach dem vorherigen Anspruch, **dadurch gekennzeichnet, dass** für die genannten noch festzulegenden Energiemengen zu Beginn des ersten gewonnenen Zeitabschnittes nach jeder Vereinbarungsabschlusszeit mehrere Szenarien für unterschiedliche Entwicklungen von zukünftig abgebbaren und/oder aufnehmbaren Energiemengen innerhalb des Zeithorizonts gebildet werden.

5. Verfahren nach dem vorhergehenden Anspruch, **dadurch gekennzeichnet, dass** die Szenarien für unterschiedliche Entwicklungen in Form einen Szenariobaums (ST) organisiert sind, wobei eine Abzweigung im Szenariobaum nach jeder Vereinbarungsabschlusszeit (tmr1, tmr2) gebildet wird.

6. Verfahren nach dem vorhergehenden Anspruch 4 oder 5, **dadurch gekennzeichnet, dass** jedes Szenario in ein oder mehrere Szenariozeitintervalle (ss) unterteilt wird, wobei jedes Szenariozeitintervall genau einem Zeitabschnitt ($os_1$, ..., $os_T$) zugeordnet ist.

7. Verfahren nach einem der vorhergehenden Ansprüche, **dadurch gekennzeichnet, dass** ein Vereinbarungszeitraum in mehrere Vereinbarungszeitfenster unterteilt sein kann, wobei für jedes Vereinbarungszeitfenster, das ganz oder teilweise innerhalb des Zeithorizonts liegt, eine abgebbare und/oder aufnehmbare Energiemenge bereits festgelegt worden oder noch festzulegen ist.

8. Verfahren nach dem vorhergehenden Anspruch 6 oder 7, **dadurch gekennzeichnet, dass** jedem Szenariozeitintervall mindestens ein Vereinbarungszeitfenster zugeordnet wird.

9. Verfahren nach einem der vorhergehenden Ansprüche 6 bis 8, **dadurch gekennzeichnet, dass** wenn sich ein oder mehrere Szenariozeitintervalle mit einem Vereinbarungszeitfenster überlappt, können jeweils in dem überlappenden Zeitintervall zum entsprechen Szenario passende, zu vereinbarende Energiemengen in die Optimierung eingebracht werden.

10. Verfahren nach einem der vorhergehenden Ansprüche, **dadurch gekennzeichnet, dass** die Optimierung mittels gemischt ganzzahliger linearer Optimierung durchgeführt wird.

11. Verfahren nach einem der vorhergehenden Ansprüche, **dadurch gekennzeichnet, dass** das Verfahren wiederholbar ist oder wiederholt wird, wenn sich die genannten Zustände und/oder die Energiemengen nach vorgebbaren Maßkriterien ändern und/oder sich einer Vereinbarungsabschlusszeit nähert.

12. Verfahren nach einem der vorhergehenden Ansprüche, **dadurch gekennzeichnet, dass** die abgebbare Energiemenge und die aufnehmbare Energiemenge ausgeglichen sind.

13. Verfahren nach einem der vorhergehenden Ansprüche, **dadurch gekennzeichnet, dass** die abgebbare Energiemenge und die aufnehmbare Energiemenge jeweils begrenzt werden.

14. Verfahren nach einem der vorhergehenden Ansprüche, **dadurch gekennzeichnet, dass** Abweichungen der noch festzulegenden abgebbaren und/oder aufnehmbaren Energiemenge von der der tatsächlich abgegebenen und/oder bereits aufgenommenen Energiemenge mit Hilfe einer Kostenfunktion reguliert werden.

15. Verfahren nach einem der vorhergehenden Ansprüche, **dadurch gekennzeichnet, dass** der genannte Zeithorizont zum Zeitpunkt beginnt, in dem zuletzt ein vorgebbarer Zustand vorliegt und gegebenenfalls eine zukünftige Vereinbarungssabschlußzeit umfasst.

16. Steuerungsvorrichtung zur Steuerung eines virtuellen Energieerzeugungs- und/oder -speicherungsverbundes (VPP) umfassend eine Anzahl von Komponenten (C1,...,C5), die mittels einer Vielzahl von Bussen energetisch miteinander gekoppelt und mit einem oder mehreren Energieverteilsystemen verbunden sind, wobei die Steuerungsvorrichtung dazu konfiguriert ist, folgende Schritte auszuführen:

  - Durchführen einer Optimierung von Einstellwerten (SP) für die Komponenten über einen vorgebbaren Zeithorizont (P), wobei die Einstellwerte Energiemengen umfassen, welche abhängig von Zuständen der Komponenten von abgebenden Komponenten abgegeben und/oder von aufnehmenden Komponenten aufgenommen werden können,
  wobei eine Energiemenge vor Durchführung der Optimierung vorgegeben ist oder durch zumindest eine Vereinbarung zwischen wenigstens einer abgebenden und wenigstens einer aufnehmenden Komponente innerhalb eines im Zeithorizont liegenden Vereinbarungszeitraumes über zumindest ein Energieverteilsystem bereits festgelegt ist, wenn eine Vereinbarungsabschlusszeit für diesen Vereinbarungszeitraum bereits abgelaufen ist, oder noch festzulegen ist, wenn eine Vereinbarungsabschlusszeit für diesen Vereinbarungszeitraum in der Zukunft liegt,
  - wobei in der Optimierung ein Zusammenwirken zwischen zuvor vorgegebenen oder bereits festgelegten Energiemengen und noch festzulegenden Energiemengen berücksichtigt wird, und
  - Durchführen der Steuerung des virtuellen Energieerzeugungs- und/oder -speicherungsverbundes basierend auf den Einstellwerten, wobei die Steuerung einen durch Vereinbarung festgelegten Austausch von Energiemengen zwischen den Komponenten bewirkt.

17. Computerprogrammprodukt mit Programmcodemitteln zur Durchführung des Verfahrens nach einem der vorhergehenden Verfahrensansprüche, wenn es ein Prozessor insbesondere der Steuerungsvorrichtung nach dem vorhergehenden Anspruch ausführt oder auf einem computerlesbarem Speichermedium gespeichert ist.

FIG 1

EP 4 071 681 A1

# FIG 2

EP 4 071 681 A1

# FIG 3

Europäisches
Patentamt

European
Patent Office

Office européen
des brevets

# EUROPÄISCHER RECHERCHENBERICHT

Nummer der Anmeldung

EP 21 16 7242

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/077507 A1 (SHEBLE GERALD BERNARD [US]) 17. März 2016 (2016-03-17) <br> * Absätze [0042] - [0056] * <br> * Absätze [0304] - [0528] * <br> * Zusammenfassung; Abbildungen 1-11 * <br> ----- | 1-17 | INV. <br> G06Q10/06 <br> G06Q50/06 |
| X | WO 2020/204262 A1 (I ON COMMUNICATIONS CO LTD [KR]) 8. Oktober 2020 (2020-10-08) <br> * Absätze [0007] - [0020] * <br> * Absätze [0030] - [0060] * <br> ----- | 1-17 | |
| X | US 2017/194814 A1 (CHAKRABORTY SHANTANU [JP] ET AL) 6. Juli 2017 (2017-07-06) <br> * Absätze [0022] - [0034] * <br> * Absätze [0054] - [0072] * <br> * Zusammenfassung; Abbildungen 1, 2 * <br> ----- | 1-17 | |
| X | DE 10 2018 213862 A1 (SIEMENS AG [DE]) 5. März 2020 (2020-03-05) <br> * Absätze [0010] - [0026] * <br> * Absätze [0036] - [0049] * <br> ----- | 1-17 | RECHERCHIERTE SACHGEBIETE (IPC) <br><br> G06Q |

Der vorliegende Recherchenbericht wurde für alle Patentansprüche erstellt

| Recherchenort | Abschlußdatum der Recherche | Prüfer |
|---|---|---|
| München | 29. September 2021 | Mülthaler, Evelyn |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 7242

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2021

| Im Recherchenbericht angeführtes Patentdokument | Datum der Veröffentlichung | Mitglied(er) der Patentfamilie | Datum der Veröffentlichung |
|---|---|---|---|
| US 2016077507 A1 | 17-03-2016 | US 2016077507 A1<br>WO 2016040774 A1 | 17-03-2016<br>17-03-2016 |
| WO 2020204262 A1 | 08-10-2020 | KR 102040027 B1<br>WO 2020204262 A1 | 04-11-2019<br>08-10-2020 |
| US 2017194814 A1 | 06-07-2017 | JP 6264474 B2<br>JP 2017511683 A<br>US 2017194814 A1<br>WO 2015162804 A1 | 24-01-2018<br>20-04-2017<br>06-07-2017<br>29-10-2015 |
| DE 102018213862 A1 | 05-03-2020 | AU 2019326931 A1<br>CN 112602247 A<br>DE 102018213862 A1<br>KR 20210046789 A<br>WO 2020043522 A1 | 11-03-2021<br>02-04-2021<br>05-03-2020<br>28-04-2021<br>05-03-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9887545 B2

**In der Beschreibung aufgeführte Nicht-Patentliteratur**

- **WOZABAL, D. ; RAMESEDER, G.** Optimal bidding of a virtual power plant on the Spanish day-ahead and intraday market for electricity. *European Journal of Operational Research,* 2020, vol. 280 (2), 639-655
- **CHAZARRA, M. ; GARCIA-GONZÄLEZ, J. ; PEREZ-DIAZ, J. I. ; ARTESEROS, M.** Stochastic optimization model for the weekly scheduling of a hydropower system in day-ahead and secondary regulation reserve markets. *Electric Power Systems Research,* 2016, vol. 130, 67-77
- **WANG, Y. ; TANG, L. ; YANG, Y. ; SUN, W. ; ZHAO, H.** A stochastic-robust coordinated optimization model for CCHP micro-grid considering multi-energy operation and power trading with electricity markets under uncertainties. *Energy,* 2020, vol. 198

- **SOWA, T. ; VASCONCELOS, M. ; SCHNETTLER, A. ; METZGER, M. ; HAMMER, A. ; REISCHBOEK, M. ; KÖBERLE, R.** Method for the operation planning of virtual power plants considering forecasting errors of distributed energy resources. *Electrical Engineering,* 2016, vol. 98 (4), 347-354
- **WENJUN T. ; HONG-TZER Y.** Optimal Operation and Bidding Strategy of a Virtual Power Plant Integrated with Energy Storage Systems and Elasticity Demand Response. *IEEE Access,* 2019, vol. 7, 79798-79809